# FASCICULE DE BREVET EUROPEEN

(11) **EP 1 280 698 B1**
(45) Date de publication et mention de la délivrance du brevet: **30.03.2005**
(21) Numéro de dépôt: 01934085.0
(22) Date de dépôt: 11.05.2001
(51) Int. Cl.: B64B 1/08, B64B 1/62

(54) **BALLON DIRIGEABLE RIGIDIFIE PAR LES RESERVOIRS D'HELIUM**
DURCH HELIUMTANK VERSTEIFTES LUFTSCHIFF
DIRIGIBLE BALLOON RIGIDIFIED BY HELIUM TANKS

(30) Priorité: 12.05.2000 FR 0006179
(43) Date de publication de la demande: 05.02.2003
(73) Titulaire: Aerospace Adour Technology, 64000 Pau (FR); Senepart, Marc, 65310 Laloubere (FR)
(72) Inventeur: SENEPART, Marc, F-65310 Laloubere (FR)
(74) Mandataire: David, Alain
(86) Numéro de dépôt international: PCT/FR2001/001421
(87) Numéro de publication internationale: WO 2001/085540

(56) Documents cités:
- FR-A- 407 385
- US-A- 1 900 743

## Description

La présente invention concerne le domaine des dispositifs de portabilité variable utilisant un gaz plus léger que l'air pour s'élever dans l'atmosphère. Plus précisément, l'invention a trait aux dispositifs de portabilité variable munis de réservoir pour stocker sous pression le gaz plus léger que l'air tel que l'hélium, le néon, le méthane, l'éthane et l'hydrogène.

Un dispositif de portabilité variable peut servir à déplacer ou lever des objets lourds ou des objets dont l'encombrement trop important interdit le transport par camion, train ou avion.

En général, les dispositifs de portabilité variable sont constitués d'un ballon contenant l'hélium et d'un panier accroché au ballon. Le panier contient différents accessoires nécessaires à la navigation. Le ballon est constitué d'une enveloppe souple soutenue par une structure rigide. La structure rigide consiste en un assemblage de poutres, une poutre étant un élément dont une dimension est grande par rapport aux deux autres dimensions. La forme que donne la structure rigide à l'enveloppe souple est choisie de manière à être aérodynamique.

Selon l'art antérieur, le panier accroché au ballon contient les réservoirs d'hélium, ainsi que d'autres accessoires. La forme des réservoirs d'hélium est choisie de manière à stocker une grande quantité d'hélium tout en réduisant l'encombrement et le poids des réservoirs.

La présente invention propose d'utiliser des poutres creuses pour constituer au moins une partie de la structure rigide qui soutient l'enveloppe souple constituant le ballon et de stocker l'hélium sous pression à l'intérieur des poutres creuses.

La présente invention est un dispositif de portabilité variable utilisant un gaz plus léger que l'air, comportant une enveloppe extérieure soutenue par une structure plus rigide, caractérisé en ce que ladite structure comprend une poutre creuse ayant un volume interne servant de réservoir pour stocker ledit gaz. La poutre creuse peut être recouverte d'un tissu étanche audit gaz et qui isole thermiquement le volume interne de la poutre creuse. La poutre creuse peut être un tore creux. Le tore creux peut comprendre aux moins deux portions de tores assemblées.

Selon une première variante de l'invention, la structure du dispositif comprend au moins deux tores creux dont les volumes internes communiquent. Selon une seconde variante de l'invention, la structure du dispositif comprend au moins deux tores creux dont les volumes internes ne communiquent pas.

La présente invention permet un gain de poids et réduit l'encombrement du panier puisque le réservoir d'hélium et la structure rigide sont un même et unique élément.

D'autres avantages et caractéristiques de l'invention apparaîtront à la lecture d'un mode de réalisation de l'invention illustré par les dessins annexés sur lesquels :
- la figure 1 représente un dispositif à portabilité variable,
- la figure 2 est une vue en coupe selon l'axe X-X' de la figure 1,
- la figure 3 représente en détail une partie de la structure rigide du ballon dirigeable,
- la figure 4 schématise en détail le fonctionnement d'un dispositif à portabilité variable.

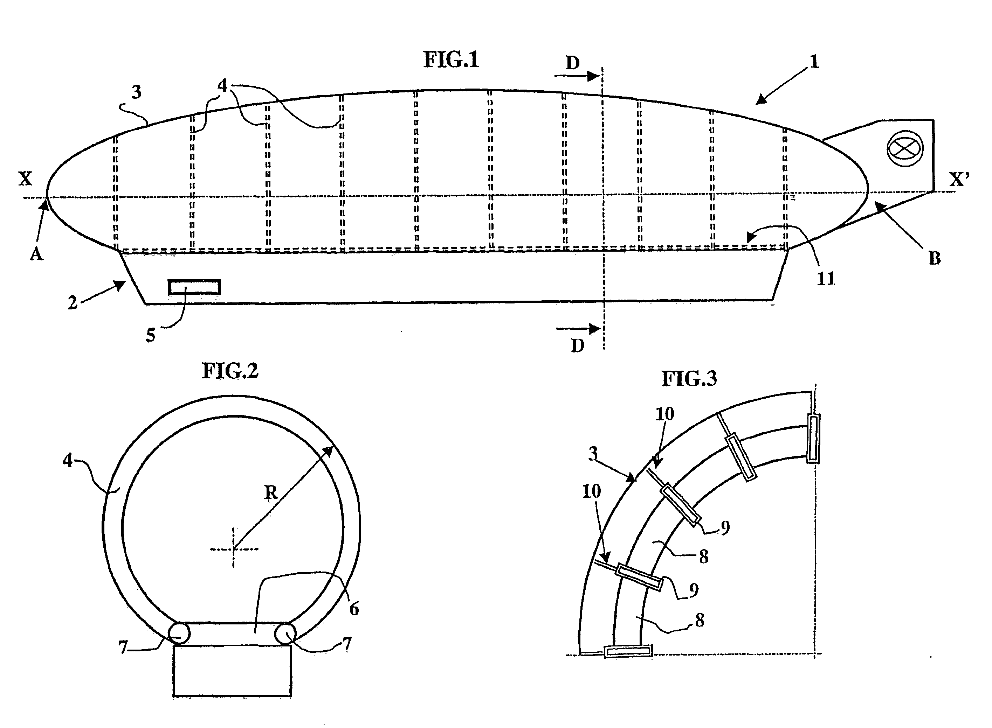

La figure 1 représente un ballon dirigeable constitué d'un panier 2 accroché à un ballon 1. Le ballon 1 a sensiblement la forme d'un ballon de rugby. C'est à dire que la forme du ballon 1 résulte de la rotation d'une courbe autour de l'axe X-X', la courbe coupant l'axe X-X' en deux points A et B. En général, le ballon dirigeable se déplace selon l'axe X-X' horizontal. Le panier 2, situé sous le ballon dirigeable, contient au moins l'unité motrice 5 qui entraîne les compresseurs d'hélium.

Le ballon 1 est composé d'une structure rigide sur laquelle repose une enveloppe souple 3. Des tores 4 constituent les principaux éléments de la structure rigide. Les tores 4 sont des tubes dont l'axe est sensiblement un cercle de rayon R contenu dans un plan. Les tores sont disposés perpendiculairement à l'axe X-X'.

Les tores 4 sont creux et constituent les réservoirs d'hélium sous pression. Les tores peuvent être des tubes en acier dont l'axe est déformé en cercle. D'après la figure 3, les tores 4 peuvent également être constitués de portions de tore 8 assemblées entre elles par un petit tube ou virole 9. La géométrie d'un tore creux est très favorable d'une part pour résister aux pressions internes et d'autre part pour résister aux contraintes venant de l'extérieur. Cela signifie d'une part qu'un réservoir en forme de tore peut contenir une grande quantité de fluide sous pression par rapport à son poids et d'autre part une poutre en forme de tore présente une grande rigidité aux efforts tel la flexion, la traction, la compression, la torsion par rapport à son poids.

D'après la figure 2, chaque tore 4 comporte en partie basse un aplatissement 6. Les volumes intérieurs des différents tores 4 communiquent par des tubes 7 dont les axes sont sensiblement parallèles à l'axe X-X'. Les tubes 7 peuvent être situés au niveau de l'aplatissement 6 des tores 4. Comme représenté sur la figure 1, les tubes 7 peuvent consistés en une poutre 11, sensiblement parallèle à l'axe X-X', qui relie tous les tores. Pour garder l'équilibre du ballon dirigeable on utilisera deux poutres 11 disposées symétriquement par rapport à la position de l'aplatissement 6 et à la forme du ballon 1. Les tubes 7 peuvent établir une connexion entre tous les volumes intérieurs des tores 4 pour réaliser un unique réservoir. Les tubes 7 peuvent également réaliser plusieurs réservoirs constitués chacun de plusieurs tores 4, mais chaque réservoir étant indépendant des autres. Les tubes 7 sous la forme de poutres 11 et les aplatissements 6 peuvent servir de support pour accrocher le panier 2 au ballon 1.

Les tores 4, leurs aplatissements 6 et les tubes 7 sont enveloppés d'un tissu assurant l'étanchéité et l'isolation thermique. Le tissu peut être un assemblage de plusieurs couches dont notamment une couche en polyéthylène, une couche renforcée par des fibres, telles des fibres de carbones, et une couche externe aluminée.

Des poutres 10, représentées sur la figure 3 et appelées lisses, relient mécaniquement les tores entre eux. Les lisses 10 peuvent être par exemple de section rectangulaire ou de section en forme de I et être réalisées en aluminium, en bois, en résine chargée de fibres de renfort. Les lisses 10 sont, de façon générale, perpendiculaires aux tores de manière à ce que l'ensemble de la structure rigide constituée des tores 4 et des lisses 10 réalise un quadrillage de toute la surface du ballon 1. Comme représenté sur la figure 2, les lisses 10 peuvent être fixés sur les viroles 9, ou sur toute autre partie des tores 4. Les lisses 10 maintiennent les tores les uns par rapport aux autres dans une position définie.

La structure rigide composée des tores 4 et des lisses 10 forme une surface quadrillée sur laquelle est déposée l'enveloppe souple 3. L'enveloppe souple 3 est principalement fixée sur les lisses 10.

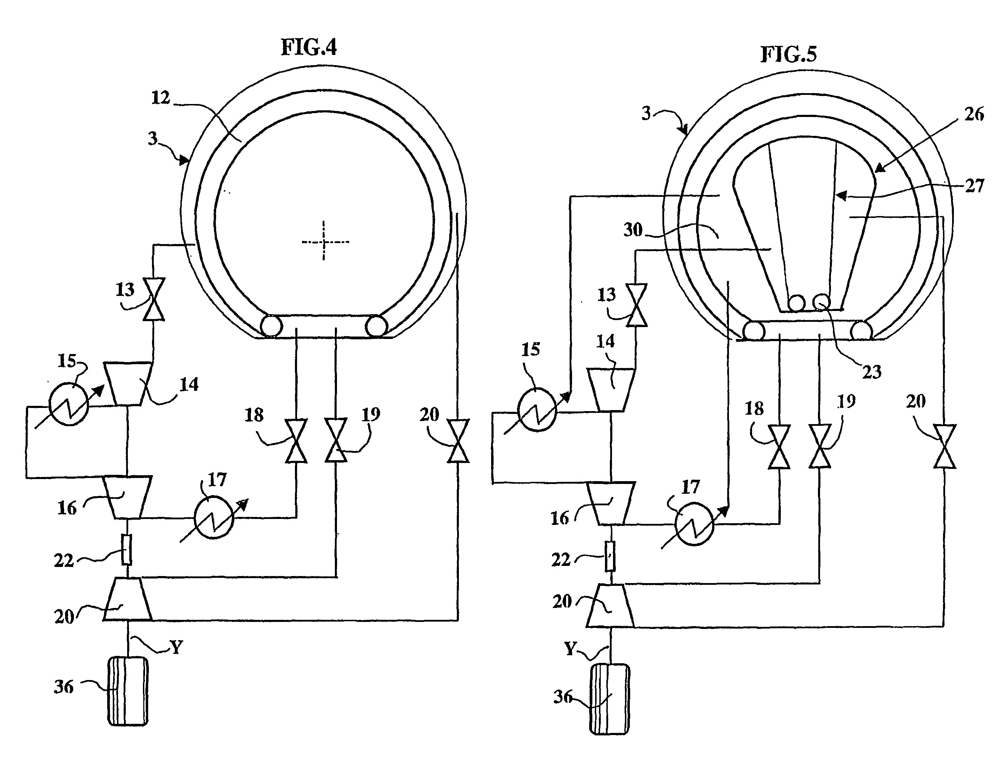

Selon la configuration d'un ballon dirigeable représentée aux figures 3 et 4, l'enveloppe souple 3 peut contenir l'hélium. Selon une autre configuration d'un ballon dirigeable représenté à la figure 5, une ou plusieurs enveloppes souples internes 26, contenues dans l'enveloppe souple 3, contiennent l'hélium.

Le fonctionnement d'un dispositif à portabilité variable selon l'invention est détaillé en relation avec la figure 4.

Lorsque les manoeuvres de navigation nécessitent de diminuer la quantité d'hélium dans le volume interne de l'enveloppe 3, on soutire de l'hélium du volume interne de l'enveloppe 3 pour le comprimer et le stocker dans les réservoirs. Le volume interne de l'enveloppe 3 communique au moyen d'une vanne 13 avec un compresseur 14 qui refoule l'hélium à une pression P1 et une température T1 dans l'échangeur de chaleur 15. L'air frais, circulant dans l'échangeur 15, refroidit de manière indirecte, c'est à dire sans contact, l'hélium à une température T2. En sortie de l'échangeur de chaleur 15, l'hélium est comprimé à la pression P2 et à une température T3 par le compresseur 16. Puis l'hélium subit un refroidissement dans l'échangeur de chaleur indirect 17 avant d'être introduit dans un réservoir 12 constitué de plusieurs tores 4 interconnectés par des tubes 7. Comme l'échangeur 15, l'échangeur de chaleur 17 utilise également l'air en tant que fluide refroidissant. La vanne 18 sécurise la communication entre la sortie de l'échangeur 17 et le réservoir 12.

Lorsque les manoeuvres de navigation nécessitent d'augmenter la quantité d'hélium dans le volume interne de l'enveloppe 3, on soutire de l'hélium des réservoirs 12 pour l'introduire dans le volume interne de l'enveloppe 3. L'hélium contenu dans le réservoir 12 peut être détendu dans la turbine 20 avant d'être introduit dans le volume intérieur de l'enveloppe 3. La vanne 19 commande l'ouverture du réservoir 12 vers la turbine 20, la vanne 21 commande l'ouverture de l'enveloppe 3 vers la turbine 20.

Un moteur 36 entraîne en rotation un arbre Y sur lequel sont montés les compresseurs 14 et 16, et la turbine 20. Un embrayage 22, monté sur l'arbre Y, permet de découpler les compresseurs 14 et 16 du moteur 36 et de la turbine 20. Ainsi, le travail fournit lors de la détente de l'hélium à travers la turbine 20 est récupéré par l'arbre Y au moyen par exemple d'un entraîneur à couple proportionnel de manière à augmenter la puissance du moteur 36.

Les échangeurs de chaleur sont indispensables pour effectuer une compression polytropique de l'hélium. Ainsi le rendement de la compression sera optimal. D'autre part en limitant l'élévation de la température de l'hélium, les organes en contact avec l'hélium sont préservés de dégradation sous l'effet d'une forte température.

Le mode de fonctionnement représenté à la figure 5 concerne un ballon dirigeable muni d'une enveloppe 3 qui contient une ou plusieurs enveloppes 26 contenant l'hélium. La forme de l'enveloppe 3 est donnée par la structure rigide constituée notamment des tores 4. La forme et le volume de l'enveloppe 26, indépendants de la forme de l'enveloppe 3, est modifiable par un ensemble de câbles 27. Un ou plusieurs treuils 23 permettent de modifier la longueur des câbles 27.

En réduisant la longueur des câbles 27, le volume interne de l'enveloppe 26 est réduite. De l'air entre par l'intermédiaire de l'échangeur de chaleur 15 pour remplir l'espace 30 compris entre l'enveloppe 3 et l'enveloppe 26. Le poids dans l'air du ballon dirigeable augmente du fait de la diminution du volume d'hélium.

## Revendications

1. Dispositif de portabilité variable utilisant un gaz plus léger que l'air, comportant une enveloppe extérieure soutenue par une structure plus rigide, **caractérisé en ce que** ladite structure comprend une poutre creuse ayant un volume interne servant de réservoir pour stocker ledit gaz.

2. Dispositif selon la revendication 1 **caractérisé en ce que** ladite poutre creuse est recouverte d'un tissu étanche audit gaz et qui isole thermiquement le volume interne de la poutre creuse.

3. Dispositif selon l'une des revendications précédentes **caractérisé en ce que** ladite poutre creuse est un tore creux.

4. Dispositif selon la revendication 3 **caractérisé en ce que** ledit tore creux comprend aux moins deux portions de tores assemblées.

5. Dispositif selon la revendication 3 **caractérisé en ce que** ladite structure comprend au moins deux tores creux dont les volumes internes communiquent.

6. Dispositif selon l'une des revendications 3 et 5 **caractérisé en ce que** ladite structure comprend au moins deux tores creux dont les volumes internes ne communiquent pas.

## Patentansprüche

1. Vorrichtung variabler Portabilität, die ein Gas verwendet, welches leichter ist als Luft, mit einer Außenhülle, die von einer steiferen Struktur gestützt wird, **dadurch gekennzeichnet, daß** die genannte Struktur einen Hohlträger aufweist, der ein Innenvolumen hat, das als Behälter zum Speichern des Gases dient.

2. Vorrichtung nach Anspruch 1, **dadurch gekennzeichnet, daß** der Hohlträger mit einem gasdichten Gewebe überzogen ist, welches das Innenvolumen des Hohlträgers wärmeisoliert.

3. Vorrichtung nach einem der vorhergehenden Ansprüche, **dadurch gekennzeichnet, daß** der Hohlträger ein Hohltorus ist.

4. Vorrichtung nach Anspruch 3, **dadurch gekennzeichnet, daß** der Hohltorus wenigstens zwei zusammengefügte Torusabschnitte umfaßt.

5. Vorrichtung nach Anspruch 3, **dadurch gekennzeichnet, daß** die Struktur wenigstens zwei Hohltori aufweist, deren Innenvolumina miteinander in Verbindung stehen.

6. Vorrichtung nach einem der Ansprüche 3 und 5, **dadurch gekennzeichnet, daß** die Struktur wenigstens zwei Hohltori aufweist, deren Innenvolumina nicht miteinander in Verbindung stehen.

## Claims

1. A variable-lift device using a gas that is lighter than air, the device comprising an outer envelope supported by a more rigid structure, the device being **characterised in that** said structure comprises a hollow beam having an inside volume that acts as a tank for storing said gas.

2. A device according to claim 1, **characterised in that** said hollow beam is covered in a cloth that is leakproof relative to said gas and that thermally insulates the inside volume of the hollow beam.

3. A device according to one of the preceding claims, **characterised in that** said hollow beam is a hollow torus.

4. A device according to claim 3, **characterised in that** said hollow torus comprises at least two assembled together torus portions.

5. A device according to claim 3, **characterised in that** said structure comprises at least two hollow toruses having inside volumes in communication.

6. A device according to claim 3 or claim 5, **characterized in that** said structure comprises at least two hollow toruses having inside volumes that are not in communication.
